# EUROPEAN PATENT SPECIFICATION

(11) **EP 1 510 607 B1**
(45) Date of publication and mention of the grant of the patent: **25.04.2007**
(21) Application number: 04019538.0
(22) Date of filing: 18.08.2004
(51) Int. Cl.: D04H 1/64, D04H 3/12, C08L 61/00, C08F 8/34

(54) **Low emission fibrous webs and method of such webs**
Emissionsarmen Vlies und Verfahren zu deren Herstellung
Non tisse a degagement d' odeur faible et proecede d' obtention

(30) Priority: 26.08.2003 US 647917
(43) Date of publication of application: 02.03.2005
(73) Proprietor: Johns Manville International, Inc., Denver, Colorado 80202 (US)
(72) Inventor: Miele, Philip Francis, Highlands Ranch Colorado 80126 (US)
(74) Representative: Luderschmidt, Schüler & Partner

(56) References cited:
- EP-A- 1 022 263
- US-A- 4 125 663
- US-A- 4 458 049
- US-A- 5 530 048

## Description

This invention involves webs of polymer fibers containing latex binder modified with formaldehyde containing crosslinkers in which the formaldehyde component is chemically bound and that display substantially reduced formaldehyde emissions during the drying, curing and further processing and storing of the webs. The webs of the invention also have good hot strength. The invention also involves the method of making polymer fiber webs having substantially lower formaldehyde emissions and substantially lower formaldehyde emissions when later processed at elevated temperatures to produce other products like asphaltic roofing products.

### Background

It is known to make polymer fibrous mats for use in making asphaltic and modified asphaltic roofing products like roll roofing products by bonding inorganic fibers or polymer together with a latex binder such as an SBR or acrylic type latex containing crosslinking ingredients that emit formaldehyde when dried and cured at an elevated temperature and when later processed with hot asphaltic material to make roofing products, or when subjected to hot, humid conditions. Such ingredients are crosslinking agents employed to improve cured physical binder properties through functional groups, usually incorporated into the latex polymer backbone by copolymerization of N-methylol acrylamide, N-methylol methacrylamide, or the addition of resins that contain N-methylol functional groups that are either chemically blocked or unblocked. Also, other binders including melamine formaldehyde resin mixed with copolymers of styrene, butadiene, acrylic acid and acrylamide and other catalysts and functional additives have been used as a binder in spunbond roofing webs. The resin binders provide Thermal Dimensional Stability to the webs to reduce stretching in the machine direction and cross machine direction shrinkage, necking down, when the webs are impregnated or coated with hot asphalt. Such a process and products are disclosed in United States Patent Nos. 3,967,032, 4,125,663. A disadvantage of these binders and products is that they emit formaldehyde vapors when heated in the drying and curing operation during manufacturing of the Spunbond webs or by hot asphalt.

It is also known to add certain known formaldehyde scavengers to binders containing resins that contain formaldehyde to reduce emissions. United States Pat. No. 5,578,371 teaches adding urea, melamine, dicyandiamide and/ or 1-10 wt. percent of a water-soluble bisulfite or precursor to urea extended phenol formaldehyde binders in the manufacture of fiber glass insulation products, which products are not later coated or impregnated with hot asphalt.

United States Pat. No. 5,795,933 also teaches adding a bisulfite such as sodium bisulfite, ammonium bisulfite or calcium bisulfite as a formaldehyde scavenger to an urea extended phenolic resin systems employing amino-group-containing formaldehyde scavengers in the manufacture of glass fiber products like thermal insulation.

United States Pat. No. 5,160,679 teaches using acetoacetamide as an effective formaldehyde scavenger in the manufacture of wood particleboard and durable press finished fabrics that use urea formaldehyde as a binder. United States Pat. No. teaches using such formaldehyde scavengers as diethylene glycol, sorbitol, urea, melamine, diazine, triazine, and a water-soluble active methylene compound in the manufacture of durable press finished fabrics and wood particleboard.

United States Pat. No. 5,612,405 teaches glass fiber products bonded with a binder containing an aqueous compatible formaldehyde resin like phenolic resin, an aqueous latex elastomeric polymer like styrene butadiene, ethylene propylene monomer, ethylene propylene-diene terpolymer, etc., an acrylic polymer like copolymers of acrylic acid, methacrylic acid acrylic or methacrylic acid esters from 1-4 carbon atoms, acrylamide polymers or copolymers and esters thereof of from 1-4 carbon atoms, and a formaldehyde scavenger like melamine, guanamine, benzyl guanamine, guanidine, dicyandiamide, and the like.

United States Pat. No. 5,719,228 teaches using furan resins to bond glass fibers together to manufacture glass fiber products and to add urea or ammonia as formaldehyde scavengers, but also teach that these known additives produce disadvantages and therefore prefer to prereact an acidic furan resin, a formaldehyde scavenger and a source of reactable formaldehyde with a source of ammonia before spraying the binder onto the glass fibers.

United States Patent No. 5,795,933 teaches aqueous metal coating compositions comprising a formaldehyde containing resin and a formaldehyde scavenger consisting essentially of an organic compound having at least one active methylene hydrogen and a pKa about 5 to 13.

United States Pat. No. 5,143,954 teaches a low formaldehyde, self-cross linking polymer latex composition for use in making nonwoven products, the composition including one or more very complex and costly formaldehyde scavengers such as N-hydroxyethylethyleneurea, ethyl acetoacetate, 2,4-pentanedione, esters of 2-cyanoacetate, 2-cyanoacetamide, trimethylopropane tricyanoacetate, and the polymerized residue of methacryloxyethyleneurea.

As the above patents indicate, a tremendous effort has been made to suppress the emissions of formaldehyde from various products containing formaldehyde containing resins as a binder, but as yet no effective solution has been known for achieving a formaldehyde resin bound spunbonded web having low formaldehyde emissions during the drying and curing operation of manufacturing the Spunbond web or when contacted with hot asphalt in the manufacture of roofing and similar products. This is the problem solved by the invention described below.

### Brief Summary of the Invention

The present invention also includes a nonwoven web of polymer fibers bonded with from about 5 to about 30 wt. percent of a cured binder composition, preferably from about 16 to about 24 wt. percent and most preferably from about 18 to about 22 wt. percent, based on the weight of the web or mat. The resin component of the binder is of a type that will emit formaldehyde when exposed to the high temperatures of drying and curing or to hot asphalt conditions, such as resins having reasonably good elasticity such as formaldehyde fortified, styrene-butadiene- acrylonitrile, acrylic and similar type resins. The binder is preferably a mixture of copolymers, like GenCryl® 9030 available from Omnova Solutions, Inc. of Chester, SC. By fortified is meant that formaldehyde is incorporated into the polymer to provide high temperature strength. The binder can also contain trace amounts of free acrylamide, acrylonitrile, butadiene, formaldehyde, methanol, styrene and 4-vinylcyclohexene. The basis weight of the web can be any conventional weight but normally is in the range of about 50 to about 250 gms/sq. meter, more typically about 100-225 and preferably about 150-200, such as about 175 gms/sq. meter. The latex may be a polymer composed of ethylene-vinyl acetate copolymer, styrene-acrylic copolymer, vinyl-acrylic copolymer, styrene-butadiene-acrylonitrile copolymer, or acrylic copolymer.

The web is a spunbonded web of polymer, such as polyester, fibers bound together with a resinous binder except that in place of prior art binders, the binder contains one or more formaldehyde fortified polymer resins that normally emit substantial formaldehyde at high temperatures, but in this invention the binder also contains a bisulfite compound, preferably ammonium bisulfite, added in amounts from at least about 0.75 wt. percent up to about 7.5 wt. percent (dry weight basis of the binder). This binder is applied in latex form to the fibrous web after the fibers are made and collected in a known manner and then the wet web is dried and heated to cure the binder in a known manner. The resultant nonwoven webs have good hot strength and low formaldehyde emissions and reasonable costs, something not heretofore attainable with these types of formaldehyde containing latex binders. The webs of the present invention are useful as substrates in known processes for making various roofing products such as built up roofing products and for other known uses in which polymer fiber webs are used.

The method of making the inventive webs is also part of the present invention. This method comprises melting a polymer, converting the melt to fibers, attenuating the fibers to the desired fiber diameter, collecting the fibers in a random pattern on a collecting surface, applying a formaldehyde containing latex resin binder to the web in an amount that the binder content of the dry web will be in the range of about 5-30 wt. percent, based on the weight of the dry web, and drying the web and curing the resin binder to bond the polymer fibers together to form a nonwoven polymer fiber web, the improvement comprising adding about 0.75-7.5 wt. percent, based on the dry weight of the formaldehyde containing resin, of a bisulfite compound to the latex binder before applying the latex binder to the collected polymer fibers.

The above inventive binder composition produces webs that reduce formaldehyde emissions by more than 25 percent, preferably at least 50 percent and most preferably about 90 percent, compared to a prior art web bound with the same resin, but not containing the bisulfite addition, when the webs are heated to 200 degrees Centigrade., a temperature expected in the drying and curing operation of manufacturing the web or when subjected to hot asphalt. This reduction of formaldehyde allows the use of preferred binding resins that contain formaldehyde while avoiding the need for costly investment in thermal or catalytic incinerators or other emission abatement equipment and their operation in both the web manufacturing plant and in the roofing plants where the webs are used.

When the word "about" is used herein it is meant that the amount or condition it modifies can vary some beyond that so long as the advantages of the invention are realized. Practically, there is rarely the time or resources available to very precisely determine the limits of all the parameters of ones invention because to do would require an effort far greater than can be justified at the time the invention is being developed to a commercial reality.

The skilled artisan understands this and expects that the disclosed results of the invention might extend, at least somewhat, beyond one or more of the limits disclosed. Later, having the benefit of the inventors disclosure and understanding the inventive concept and embodiments disclosed including the best mode known to the inventor, the inventor and others can, without inventive effort, explore beyond the limits disclosed to determine if the invention is realized beyond those limits and, when embodiments are found to be without any unexpected characteristics, those embodiments are within the meaning of the term about as used herein. It is not difficult for the artisan or others to determine whether such an embodiment is either as expected or, because of either a break in the continuity of results or one or more features that are significantly better than reported by the inventor, is surprising and thus an unobvious teaching leading to a further advance in the art.

### Detailed Description of Preferred Embodiments

The polymer fiber webs of the present invention can be formed by many known processes for making polymer fiber webs, but a typical preferred process is disclosed in United States Patent No. 4,163,305, which reference is incorporated herein by reference. After the fibers, which can be any known polymer fiber, but are preferably polyester fibers, are collected in a nonwoven form on a collection surface such as a permeable conveyor belt or chain, the web is passed through a binder applicator section where an aqueous latex binder is applied in any conventional manner in the amount desired. The wet, bindered web is then passed through a hot oven to dry the web and to cure the resinous latex binder.

The binders used to make the webs of the present invention are water-based latexes containing one or more polymer resins and a bisulfite, preferably ammonium bisulfite. The bisulfite is present in amounts from about 0.75 wt. percent to about 7.5 wt. percent, based on the dry weight of the resin. Typically the bisulfite is added in an aqueous solution in a concentration of about 60 wt. percent, but it can be added in other well known forms so long as it dissolves in the binder latex.

The resin used is a resin that is a latex polymer composed of ethylene-vinyl acetate copolymer, styrene-acrylic copolymer, vinyl-acrylic copolymer, styrene-butadiene-acrylonitrile copolymer, or acrylic copolymer. The various copolymers may be prepared by emulsion polymerization of one or more acrylic ester monomers including ethyl acrylate, methyl acrylate, methyl methacrylate, butyl acrylate, 2-ethyl hexylacrylate, hydroxyethyl acrylate, hydroxypropyl acrylate, and hydroxyethyl methacrylate; acrylamide or substituted acrylamides; butadiene; styrene ; acrylonitrile; vinyl acetate or other vinyl esters; carboxylic acid monomers or ethylenically unsaturated anhydrides which can generate carboxylic acids. The latex polymer will have an internal N-methylol crosslinker such as of N-methylol acrylamide, N-methylol methacrylamide, or added resins that contain N-methylol functional groups that are either chemically blocked or unblocked.

These types of resin all emit significant amounts of formaldehyde when heated to high temperatures, such as the conditions in the drying and curing operation of manufacturing the webs or when contacted with hot, molten asphalt in typical roll roofing (Built-Up-Roofing products) manufacturing processes. These resins are typically fortified SBR, acrylic and resins having similar properties as these resins. A preferred resin is known as G-9030 available from Omnova Solutions, Inc. of Chester, SC. This material is a styrene-butadiene-acrylonitrile type latex having the following characteristics:
Active solids concentration in water 50%
Ph - about 7.5
Specific Gravity - 1.08
Volatile organic content (VOC) < 0.1%

Any type of polymer fibers can be used in the webs of the present invention depending upon the desired properties of the webs and the intended applications as is well known to the artisan. When making webs for use in making roofing products spunbond polyester fibers are preferred. The following examples demonstrate the problems solved by the present invention, some of the preferred embodiments and the most preferred embodiment, and demonstrate only a few of the many possible embodiments of the present invention.

### Example 1

A polyester spunbonded mat was made in a known manner such as the process described in U. S. Patent No. 4,125,663, the disclosure hereby incorporated herein by reference, in which the binder used to bond the polyester fibers together was GenCryl® 9000, an emulsified styrene butadiene acrylonitrile copolymer latex binder containing very little formaldehyde, available from Omnova Solutions, Inc. of Chester, SC. This binder did not contain a bisulfite addition. The binder content was 20 wt. percent in the finished dry mat, based on the weight of the dry mat. The properties of this mat are shown in Table 1 below.

### Example 2

A second polyester spunbond mat was made in the same process as the mat made in Example 1 above except the binder used was GenCryl® 9030, the high performance mixed polymer latex type binder with a 50 percent concentration in water and available from Omnova Solutions, Inc. This binder is described above in detail. The binder content in the mat made in this example was about 18 wt. percent. By high performance binder is meant that the binder contains N-methylol functionality and as such exhibits improved high temperature performance characteristics when subjected to temperatures of hot asphalt, 200 degrees centigrade.. No addition of bisulfite was made to this binder. The properties of this mat are shown in Table 1 below.

### Example 3

Another web was made using the process used in Example 1 except that 2.5 wt. percent of ammonium bisulfite (60% concentration in water), based on the dry weight of the binder, was added to the high performance GenCryl® G-9030 binder containing formaldehyde used in Example 2 above. These properties of this finished mat are compared with the properties of the mats made in Examples 1 and 2 in Table 1.

**Table 1**

| **Properties** | **Example 1** | **Example 2** | **Example 3** |
|---|---|---|---|
| Binder Content (wt. %) | 20 | 18 | 18 |
| Basis wt. (gms/sq. meter) | 173 | 174 | 172 |
| Thickness (mm) | 0.95 | 1.01 | 1.00 |
| Tensile strength (lb./in.) | | | |
| Machine Direction | 72 | 79 | 75 |
| Cross Machine Dir. | 46 | 44 | 42 |
| Elongation (%) | | | |
| Machine Direction | 31 | 30 | 30 |
| Cross Machine Dir. | 33 | 34 | 33 |
| Shrinkage @ 200 deg. C.(%) | | | |
| Machine Direction | 0.90 | 0.93 | 0.94 |
| Cross Machine Dir. | -0.30 | -.20 | -0.22 |
| Tear Strength (lbs.) | | | |
| Machine Direction | 32 | 32 | 31 |
| Cross Machine Dir. | 23 | 23 | 23 |
| TDS* @ 200 deg. C. (%) | | | |
| Machine Direction | 1.5 | 1.0 | 1.0 |
| Cross Machine Dir. | -1.6 | -1.2 | -1.3 |
| Tube Furnace Emissions | | | |
| (ppm formaldehyde)** - | 1400 | 16,333 | 4628 |

| | | | |
|---|---|---|---|
| * Thermal Dimensional Stability (Description of test given below). ** binder heated to 200 deg. C. and exhaust gas analyzed. | | | |

Thermal Dimensional Stability is a characteristic that is very important in the use of nonwoven polymer fiber mats in the manufacture of roofing products. As discussed above in the background, polymer fiber mats tend to stretch in the machine direction and neck down, shrink, in the cross machine direction when coated or impregnated with hot, molten, asphalt or modified asphalt material. This stretching and particularly the necking down in the cross machine direction requires the use of a wider mat to compensate and to insure the final dimension of the roofing product. Wider mats are often much more costly because the machine making the mats is limited in width and as much as 20-50% productivity can be lost when making a wider mat.

The test for Thermal Dimensional Stability is as follows. Three test samples measuring 350 mm in the machine direction of the mat and 100 mm in the cross machine direction are cut from the mat with a specimen being taken 100 mm from each side of the mat and the third sample taken from the center portion of the mat. A line is drawn across one surface of each of the samples 50 mm on each side of and parallel to the lengthwise centerline of the sample using a material that will still be visible after heating to 200 degrees C. Each sample is mounted on a stand with a preheated clamp that allows each sample to hang vertically in a furnace with a four kg weight attached to the bottom clamp on the sample to provide stress on the sample similar to the stress on the mat in the roofing product manufacturing process. Clamps attaching to each sample are preheated for five minutes at 200 degrees Centigrade in the oven, removed and attached to the samples and placed back into the 200 degree oven for five minutes, then removed and allowed to cool under stress for five minutes. The distance between the marks made on each sample is measured as is the width of the sample at the lengthwise centerline and the amount of change calculated. The three machine direction results are averaged to give the machine direction percent change and the three width or cross machine direction results are averaged to give the cross machine direction percent change. Values of 1.0% or less are highly desirable.

The nonwoven web or mat of Example 1 has been used to make roofing products. It has acceptable formaldehyde emissions in the drying and curing section of the web manufacturing process or hot asphalt coating operation, but it produces lower performance in hot elongation in the roofing manufacturing process than desired as indicated by the TDS results, i. e. more than desired stretching in the machine direction and necking down in the cross machine direction. The nonwoven mat of Example 2 had about 33% improvement in the TDS test compared to that of Example 1, an acceptable hot strength, but the formaldehyde emissions at elevated temperature was unacceptably high.

The addition of a bisulfite is effective in lowering formaldehyde emissions at elevated temperatures in amounts as low as 0.75 wt. percent based on the dry weight of the formaldehyde resin in the latex. Table 2 shows the effect of ammonium bisulfite concentration in the G - 9030 latex binder in webs made using the method of Example 3, but varying the amount of ammonium bisulfite addition to the binder before applying the binder latex to the polyester web.

**Table 2**

| **Tube Furnace Results:** | **0%** | **0.75%** | **1.25%** | **2.5%** | **5%** |
|---|---|---|---|---|---|
| Emissions (ppm CH20) | 16,333 | 12,000 | 085 | 4630 | 1265 |

The bisulfite compound is useful up to about 7.5 wt. percent to reduce emissions, but above about 7.5 percent the bisulfite begins to degrade the properties of the webs. While ammonium bisulfite is the preferred additive, the bisulfite can be any bisulfite material such as sodium bisulfite, calcium bisulfite, etc.

## Claims

1. A spunbonded web of polymer fibers bound by about 5-30 wt. percent, based on the dry weight of the mat, of a formaldehyde containing polymer resin latex binder providing good hot strength at 200 degrees C. and good elasticity to the web, the resin containing at least about 0.75 wt. percent and up to about 7.5 wt. percent of a bisulfite compound, based on the dry weight of the formaldehyde containing resin in the binder, wherein the resin is selected from the group consisting of formaldehyde fortified latex polymers which may be composed of ethylene-vinyl acetate copolymer, styrene-acrylic copolymer, vinyl-acrylic copolymer, styrene-butadiene-acrylonitrile copolymer, or acrylic copolymer.

2. The web of claim 1 wherein the bisulfite is ammonium bisulfite.

3. The web of claim 1 or 2 wherein the bisulfite compound is present in an amount of at least 1.25 wt. percent.

4. The web of claim 3 wherein the bisulfite compound is present in an amount of at least 2.5 wt. percent.

5. The web of at least one of the claims 1 to 4 wherein the polymer fibers are polyester, the ammonium bisulfite compound is ammonium bisulfite, the binder content of the web is in the range of about 16-24 wt. percent and the basis weight of the web is in the range of about 150-200 gms/sq. meter.

6. A method of making a polymer fiber web by melting a polymer, converting the melt to fibers, attenuating the fibers to the desired fiber diameter, collecting the fibers in a random pattern on a collecting surface, applying a latex formaldehyde containing polymer resin binder to the web in an amount that the binder content of the dry web will be in the range of about 5-30 wt. percent, based on the weight of the dry web, and drying the web and curing the polymer resin binder to bond the polymer fibers together to form a nonwoven polymer fiber web, said polymer resin being selected from the group consisting of formaldehyde fortified latex polymers which may be composed of ethylene-vinyl acetate copolymer, styrene-acrylic copolymer, vinyl-acrylic copolymer, styrene-butadiene-acrylonitrile copolymer, or acrylic copolymer , the improvement comprising adding about 0.75-7.5 wt. percent, based on the dry weight of the formaldehyde containing resin, of a bisulfite compound to the latex binder before applying the latex binder to the collected polymer fibers.

7. The method of claim 6 wherein about 1.25-7.5 wt. percent of the bisulfite compound is added to the latex binder before applying the latex binder to the collected polymer fibers.

8. The method of claim 7 wherein about 2.5-5 wt. percent of the bisulfite compound is added to the latex binder before applying the latex binder to the collected polymer fibers.

9. The method of claims 6, 7 or 8 wherein the polymer is polyester and the bisulfite compound is ammonium bisulfite.

## Patentansprüche

1. Spinnvliesstoff aus Polymerfasern, verfestigt durch etwa 5 - 30 Gew.-Prozent, basierend auf dem Trockengewicht der Vliesmatte, eines Formaldehyd enthaltenden Polymerharz-Latexbindemittel, das dem Vliesstoff bei 200 °C gute Heißfestigkeit und gute Elastizität verleiht, wobei das Harz mindestens etwa 0,75 Gew.-Prozent und bis zu etwa 7,5 Gew.-Prozent einer Bisulfitverbindung enthält, basierend auf dem Trockengewicht des Formaldehyd enthaltenden Harzes in dem Bindemittel, wobei das Harz ausgewählt wird aus der Gruppe bestehend aus mit Formaldehyd verstärkten Latexpolymeren, die aus Ethylen-Vinylacetat-Copolymer, Styrol-Acryl-Copolymer, Vinyl-Acryl-Copolymer, Styrol-Butadien-Acrylnitril-Copolymer oder Acrylcopolymer zusammengesetzt sein können.

2. Vliesstoff nach Anspruch 1, wobei das Bisulfit Ammoniumbisulfit ist.

3. Vliesstoff nach Anspruch 1 oder 2, wobei die Bisulfitverbindung in einer Menge von mindestens 1,25 Gew.-Prozent vorliegt.

4. Vliesstoff nach Anspruch 3, wobei die Bisulfitverbindung in einer Menge von mindestens 2,5 Gew.-Prozent vorliegt.

5. Vliesstoff nach mindestens einem der Ansprüche 1 - 4, wobei die Polymerfasern Polyester sind, die Ammoniumbisulfitverbindung Ammoniumbisulfit ist, der Bindemittelgehalt in dem Vliesstoff in dem Bereich von etwa 16 - 24 Gew.-Prozent liegt und das Flächengewicht des Vliesstoffes in dem Bereich von etwa 150 - 200 g/Quadratmeter liegt.

6. Verfahren zur Herstellung eines Vliesstoffes aus Polymerfaser, durch Schmelzen eines Polymers, Umwandeln der Schmelze zu Fasern, Ausziehen der Fasern zum gewünschten Faserdurchmesser, Sammeln der Faser in einem zufälligen Muster auf einer Sammelfläche, Aufbringen eines Formaldehyd enthaltenden Latex-Polymerharzbindemittels auf des Vliesstoff in einer Menge, dass der Bindemittelgehalt des trockenen Vliesstoffes in dem Bereich von etwa 5 - 30 Gew.-Prozent, basierend auf dem Gewicht des trockenen Vliesstoffes, liegt, und Trocknen des Vliesstoffes und Härten des Polymerharzbindemittels, um die Polymerfasern zu verfestigen, um ein Vlies aus Polymerfaser zu bilden, wobei genanntes Polymerharz ausgewählt wird aus der Gruppe bestehend aus mit Formaldehyd verstärkten Latexpolymeren, die aus Ethylen-Vinylacetat-Copolymer, Styrol-Acryl-Copolymer, Vinyl-Acryl-Copolymer, Styrol-Butadien-Acrylnitril-Copolymer oder Acrylcopolymer zusammengesetzt sein können, wobei die Verbesserung die Zugabe von etwa 0,75 - 7,5 Gew.-Prozent, basierend auf dem Trockengewicht des Formaldehyd enthaltenden Harzes, einer Bisulfitverbindung zu dem Latexbindemittel umfasst, vor dem Aufbringen des Latexbindemittels auf die gesammelten Polymerfasern.

7. Verfahren nach Anspruch 6, wobei etwa 1,25 - 7,5 Gew.-Prozent der Bisulfitverbindung zu dem Latexbindemittel gegeben werden, bevor das Latexbindemittel auf die gesammelten Polymerfasern aufgebracht wird.

8. Verfahren nach Anspruch 7, wobei etwa 2,5 - 5 Gew.-Prozent der Bisulfitverbindung zu dem Latexbindemittel gegeben werden, bevor das Latexbindemittel auf die gesammelten Polymerfasern aufgebracht wird.

9. Verfahren nach Anspruch 6, 7 oder 8, wobei das Polymer Polyester ist und die Bisulfitverbindung Ammoniumbisulfit ist.

## Revendications

1. Une toile non-tissée de fibres polymère liée à environ 5-30 wt. pour cent, sur base du poids sec du tapis, d'un liant latex de résine polymère contenant du formaldéhyde fournissant une bonne force de chaleur à 200 degrés C et une bonne élasticité à la toile, la résine contenant au moins environ 0,75 wt. pour cent et jusqu'à 7,5 wt. pour cent d'un composé bisulfite, sur base du poids sec de la résine formaldéhyde du liant, dans lequel la résine est selectionnée du groupe se composant de polymère latex fortifié de formaldéhyde qui peut être composé de copolymère éthylène-vinyl-acétate, copolymère styrène-acétate, copolymère vinyl-acétate, copolymère styrène-butadiène-acrylonitrile ou copolymère acétate.

2. La toile de la revendication 1 où le bisulfite est bisulfite d'ammonium.

3. La toile de la revendication 1 et 2 où le composé bisulfite est présent dans une quantité d'au moins 1,25 wt. pour cent.

4. La toile de la revendication 3 où le composé bisulfite est présent dans une quantité d'au moins 2,5 wt. pour cent.

5. La toile d'au moins une des revendications 1 à 4 où les fibres polymère sont polyester, le composé bisulfite d'ammonium est bisulfite d'ammonium, la teneur du liant de la toile est d'environ 16-24 wt. pour cent et le grammage de la toile est d'environ 150-200 gms/sq. mètre.

6. Une méthode de fabriquer une toile de fibre polymère en fondant un polymère, convertir la fonte en fibres, mincir les fibres jusqu'au diamètre de la fibre desirée, récupérer les fibres selon une structure quelconque sur une surface d'assemblage, appliquer un liant résine contenant du formaldéhyde latex sur la toile dans une quantité, qui fait que la teneur du liant de la toile sèche soit autour d'environ 5-30 wt. pour cent, sur base du poids de la toile sèche, et sécher la toile et faire sécher par UV le liant de résine polymère pour lier les fibres polymère ensemble afin de former une toile de fibre polymère non-tissée, ayant dit que la résine polymère est selectionnée du groupe se composant de polymères latex fortifiés de formaldéhyde qui peuvent être composés de copolymère éthylène-vinyl-acétate, copolymère styrène-acétate, copolymère vinyl-acétate, copolymère styrène-butadiène-acrylonitrile ou copolymère acétate, l'amélioration comprenant l'ajout d'environ 0,75-7,5 wt. pour cent, sur base du poids sec de la résine contenant du formaldéhyde, d'un composé bisulfite à un liant latex avant d'appliquer le liant latex aux fibres de polymère collectionnées.

7. La méthode de la revendication 6 où environ 1,25-7,5 wt. pour cent du composé bisulfite sont ajoutés au liant latex avant d'appliquer le liant latex aux fibres polymère collectionnées.

8. La méthode de la revendication 7 où environ 2,5-5 wt. pour cent du composé bisulfite sont ajoutés au liant latex avant d'appliquer le liant latex aux fibres polymère collectionnées.

9. La méthode des revendication 6, 7 et 8 où le polymère est polyester et le composé bisulfite est bisulfite d'ammonium.
